# EUROPEAN PATENT SPECIFICATION

(11) **EP 4 449 745 B1**
(45) Date of publication and mention of the grant of the patent: **01.10.2025**
(21) Application number: 22835787.7
(22) Date of filing: 15.12.2022
(51) Int. Cl.: H04W 4/06, H04L 45/16, H04W 84/18

(54) **ROUTING DATA IN A COMMUNICATION NETWORK**
ROUTEN VON DATEN IN EINEM KOMMUNIKATIONSNETZ
ROUTAGE DE DONNÉES DANS UN RÉSEAU DE COMMUNICATION

(30) Priority: 16.12.2021 SE 2151546
(43) Date of publication of application: 23.10.2024
(73) Proprietor: ASSA ABLOY AB, 107 23 Stockholm (SE)
(72) Inventor: BISMARK, Hardy, 26133 Landskrona (SE); JONSSON, Tomas, 144 62 Rönninge (SE); LINDROTH, Lars, 165 72 Hässelby (SE)
(74) Representative: Kransell & Wennborg KB
(86) International application number: PCT/EP2022/086100
(87) International publication number: WO 2023/111160

(56) References cited:
- US-A1- 2007 189 290
- US-A1- 2015 201 323
- US-B1- 6 836 481

## Description

### TECHNICAL FIELD

The present disclosure relates to the field of routing data in a communication network and in particular to methods, a routing node, a gateway, computer programs and computer program products for routing data in a communication network using multicast.

### BACKGROUND

Wireless communication networks have increased in popularity in recent years. These include traditional networks and mesh networks. In mesh networks, mesh nodes can function both as routing nodes and as a communication node, i.e. as a recipient or transmitter. ZigBee is one example of a known mesh network.

US2015/201323 A1 discloses encapsulating of received multicast traffic in unicast IP packets to support distribution of multicast traffic through a mesh network.

In wireless communication networks, there is a risk for deteriorated radio characteristics for individual links between two network nodes. Routing can be updated over time, but the routing is designed to update slowly to avoid routing changing back and forth erratically based on temporary variations of radio conditions.

A wireless network device, such as an electronic lock, sometimes experiences poor performance for communication, e.g. if a nearby person or vehicle is blocking or attenuating radio signals.

A problem is thus how reliability of the wireless transmissions can be improved without requiring constant updates to routing tables?

### SUMMARY

The aforementioned problem is solved by the features of the independent claims. Preferred embodiments are defined in the dependent claims.

One object is to improve how messages are transmitted when the network performance may prevent proper communication.

According to a first aspect, it is provided a method for routing data in a communication network, the method being performed by a routing node. The method comprises: receiving an uplink message from an end node over a multicast wireless transmission; forwarding the uplink message towards a destination node over a unicast transmission; receiving, after the forwarding of the uplink message, a downlink message over a unicast transmission; determining that a recipient of the downlink message is the end node; and transmitting the downlink message over multicast to the end node.

The transmitting the downlink message over multicast is only performed conditional on determining that the recipient of the downlink message is the end node from which the uplink message was received over multicast.

According to a second aspect, it is provided a routing node for routing data in a communication network. The routing node comprises: a processor; and a memory storing instructions that, when executed by the processor, cause the routing node to: receive an uplink message from an end node over a multicast wireless transmission; forward the uplink message towards a destination node over a unicast transmission; receive, after the forwarding of the uplink message, a downlink message over a unicast transmission; determine that a recipient of the downlink message is the end node; and transmit the downlink message over multicast to the end node.

The instructions to transmit the downlink message over multicast may comprise instructions that, when executed by the processor, cause the routing node to transmit the downlink message conditional on determining that the recipient of the downlink message is the end node from which the uplink message was received over multicast.

According to a third aspect, it is provided a computer program for routing data in a communication network. The computer program comprises computer program code which, when executed on a routing data in a communication network causes the routing data in a communication network to: receive an uplink message from an end node over a multicast wireless transmission; forward the uplink message towards a destination node over a unicast transmission; receive, after the forwarding of the uplink message, a downlink message over a unicast transmission; determine that a recipient of the downlink message is the end node; and transmit the downlink message over multicast to the end node.

According to a fourth aspect, it is provided a computer program product comprising a computer program according to the third aspect and a computer readable means comprising non-transitory memory in which the computer program is stored.

According to a fifth aspect, it is provided a method for routing data in a communication network. The method is performed by a gateway. The method comprises: receiving a first multicast instance of an uplink message; determining first radio metrics of the first multicast instance of the uplink message; receiving a second multicast instance of the uplink message; determining second radio metrics of the second multicast instance of the uplink message; and selecting a downlink routing path to correspond to the instance, of the first multicast instance and the second multicast instance, that is determined to exhibit better radio metrics.

The first and second radio metrics may be based on multiple hops of the uplink message.

According to a sixth aspect, it is provided a gateway for routing data in a communication network. The gateway comprises: a processor; and a memory storing instructions that, when executed by the processor, cause the gateway to: receive a first multicast instance of an uplink message; determine first radio metrics of the first multicast instance of the uplink message; receive a second multicast instance of the uplink message; determine second radio metrics of the second multicast instance of the uplink message; and select a downlink routing path to correspond to the instance, of the first multicast instance and the second multicast instance, that is determined to exhibit better radio metrics.

The first and second radio metrics may be based on multiple hops of the uplink message.

According to a seventh aspect, it is provided a computer program for routing data in a communication network. The computer program comprises computer program code which, when executed on a gateway causes the gateway to: receive a first multicast instance of an uplink message; determine first radio metrics of the first multicast instance of the uplink message; receive a second multicast instance of the uplink message; determine second radio metrics of the second multicast instance of the uplink message; and select a downlink routing path to correspond to the instance, of the first multicast instance and the second multicast instance, that is determined to exhibit better radio metrics.

According to an eighth aspect, it is provided a computer program product comprising a computer program according to the seventh aspect and a computer readable means comprising non-transitory memory in which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, in which:
Fig 1 is a schematic drawing illustrating an environment in which embodiments presented herein can be applied.
Fig 2 is a flow chart illustrating embodiments of methods for routing data in a communication network, such as the communication network of Fig 1, where the methods are performed in a routing node;
Fig 3 is a flow chart illustrating embodiments of methods for routing data in a communication network, such as the communication network of Fig 1, where the methods are performed in a gateway;
Fig 4 is a schematic diagram illustrating components of the routing node and the gateway of Fig 1; and
Fig 5 shows one example of a computer program product comprising computer readable means.

### DETAILED DESCRIPTION

The aspects of the present disclosure will now be described more fully hereinafter with reference to the accompanying drawings, in which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

According to embodiments presented herein, when it is desired to improve reliability of communication, e.g. due to poor performance or the need to deliver a high priority message, multicast is used for transmission of an uplink message from the end node. The uplink message is received by multiple recipients, including one or more routing nodes that might not be the parent node of the end node. When a routing node receives the multicast transmission, the routing node routes the uplink message using traditional routing to its recipient. In this way, the uplink message has a chance to circumvent a blocking object between the end node and its parent routing node. In this way, the message is transmitted with greatly improved reliability compared to when conventional unicast links are used. Additionally, when a gateway receives multiple instances of an uplink message (due to the multicasting in the first link from the end node), the gateway can determine a downlink path through the communication network based on radio metrics of the multiple received uplink messages. Once the gateway receives a downlink message (which can be a reply to the uplink message), the gateway thus uses the determined downlink path to the most appropriate routing node having received the multicast message from the end node. When the routing node receives the downlink message, it determines a match between the recipient of the downlink message with the transmitter of the multicast message. The routing node then determines to use multicast for the transmission of the downlink message to the end node (since the uplink message was received using multicast).

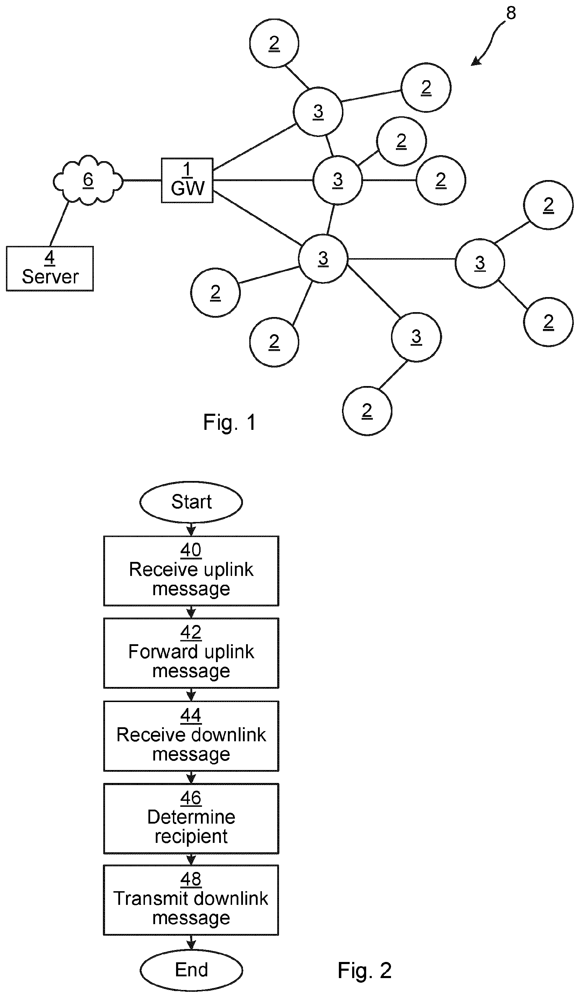

Fig 1 is a schematic drawing illustrating an environment in which embodiments presented herein can be applied. It is shown a communication network 8, which in this example is illustrated as a mesh network. The communication network 8 comprises a gateway 1, a number of routing nodes 3 and a number of end nodes 2. The gateway 1 (also known as coordinator) provides connectivity with a second network 6. The second network 6 can be wire-based such as a local area network (LAN) e.g. based on Ethernet. Alternatively or additionally, the second network is wireless, e.g. based on any Wi-Fi, Bluetooth, etc. The second network 6 optionally forms part of the Internet. One or more servers 4 is connected to the second network 6. A communication path is thereby provided connectivity between any node in the communication network 8 and the server 4. This can e.g. be used for access decisions when an end node 2 is an electronic lock and the server 4 makes central access decisions for the end node 2.

The routing nodes 3 route data downlink (in a direction towards one of the end nodes 2) and/or uplink (in a direction from one of the end nodes 2, e.g. to a server 4).

The end nodes 2 can receive downlink data and transmit uplink data via one or more routing nodes 3. In normal operation, each end node has a parent routing node 3 that routes all uplink and downlink communication for the end node 2. The end nodes 2 can be in a low-power mode, such as a sleep mode, when not needing to transmit or receive data. Each end node 2 can e.g. be an electronic lock, a sensor (for temperature, door/window position, an actuator, etc.) or any other suitable device that benefits from communication, such as other Internet-of-Things (IoT) devices.

It is to be noted that a device can function both as an end node 2 and a routing node 3, and this can also change over time. Hence, whenever the term 'routing node' is used herein, the mentioned functions can be performed by a node that is also an end node 2.

The communication network 8 can contain any suitable number of network nodes and the network of Fig 1 is only an illustratory example. While the communication network 8 is here represented in two dimensions, the end nodes can be provided in a three-dimensional space, e.g. on different floors of a building, such as a hotel. However, also in a three-dimensional space, the communication network 8 is based on links between the gateway 1, the routing nodes 3 and end nodes 2 in an analogy with what is presented in Fig 1. The communication network 8 can be implemented using any suitable technology standard, e.g. Zigbee, Thread, BLE (Bluetooth Low Energy) mesh, Wi-Fi, etc.

The routing performed by the routing node 3 is normally based on routing tables and can be updated from time to time. However, according to embodiments presented herein, in addition to the point-to-point routing provided using the communication stack of a communication standard of the communication network 8, the routing nodes can here also exploit multicast transmissions to improve reliability of communication.

Fig 2 is a flow chart illustrating embodiments of methods for routing data in a communication network, such as the communication network of Fig 1. The methods are performed in a routing node 3.

In a *receive uplink message* step 40, the routing node 3 receives an uplink message from an end node 2 over a multicast wireless transmission. The multicast transmission can occur as part of the communication stack of the communication network, e.g. using Zigbee, Thread, Wi-Fi, etc. The routing node 3 stores data indicating that the end node 2 transmitted multicast transmission in the uplink.

In *a forward uplink message* step 42, the routing node 3 forwards the uplink message towards a destination node over a unicast transmission. to assist in delivering the message to its intended recipient.

In a *receive downlink message* step 44, the routing node 3 receives a downlink message over a unicast transmission. The downlink message can e.g. originate from the node that was the recipient of the uplink message received in the *receive uplink message* step 40. This step is performed after the *forward uplink message* step 42.

In a *determine recipient* step 46, the routing node 3 determines that a recipient of the downlink message is the end node 2, i.e. the end node that transmitted the uplink message over multicast that was received in the *receive uplink message* step 40.

In a *transmit downlink message* step 48, the routing node 3 transmits the downlink message over multicast to the end node 2. Since multicast was used to receive the uplink message, multicast is also used for the downlink message. The routing node 3 can determine that the recipient previously transmitted the uplink message using multicast based on the data stored in step 40. In one embodiment, the transmitting the downlink message over multicast is only performed conditional on determining that the recipient of the downlink message is the end node 2 from which the uplink message was received over multicast. In other words, in this case, step 46 is required to have an affirmative outcome for the downlink message to be transmitted.

Using this method, efficient routing is provided to support multicast transmissions between the routing node and the end node. By exploiting multicast when reliability needs to be increased, the message is routed in several paths, which can thus avoid transmission link where there can be an attenuating object, such as a person or vehicle, being in the way between two nodes.

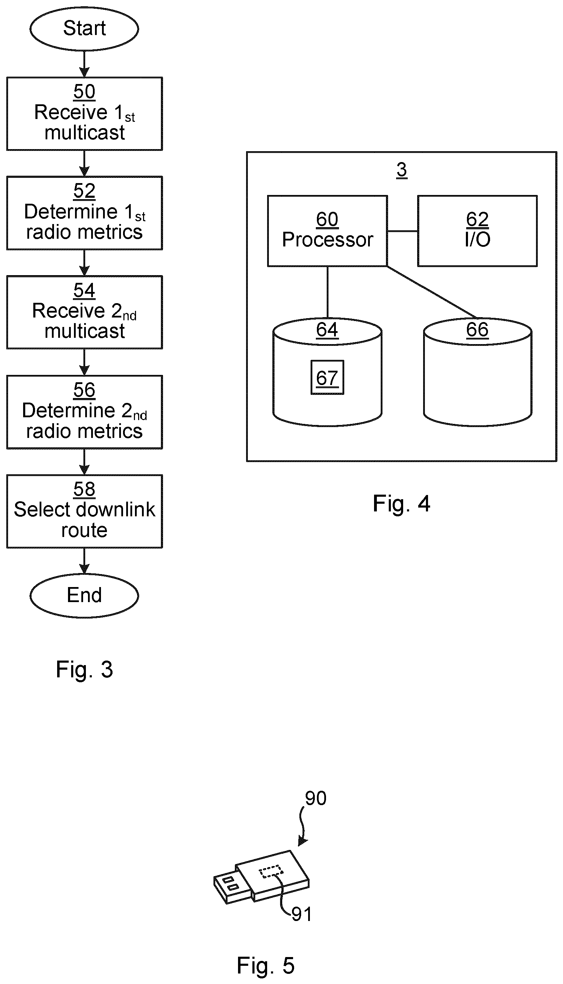

Fig 3 is a flow chart illustrating embodiments of methods for routing data in a communication network, such as the communication network of Fig 1. The methods are performed in a gateway 1.

In a *receive first multicast* step 50, the gateway 1 receives a first multicast instance of an uplink message. The first multicast instance of the uplink message is received from a gateway node 3 in the communication network 8 over a first path through the communication network 8.

In a *determine first radio metrics* step 52, the gateway 1 determines radio metrics of the first multicast instance of the uplink message.

In a *receive second multicast* step 54, the gateway 1 receives a second multicast instance of the uplink message. The second multicast instance of the uplink message is received from a routing node 3 in the communication network 8 over a second path through the communication network 8. The first path and the second path are not identical; otherwise, there would not exist both the first instance and the second instance. Specifically, at least the first routing node 3 that receives the multicast message from the end node 2 is different between the first path and the second path.

In a *determine second radio metrics* step 56, the gateway 1 determines second radio metrics of the second multicast instance of the uplink message.

The first and second radio metrics are based on multiple hops of the uplink message. Hence, each one of the radio metrics are based on the different hops of the message through the communication network. Each hop can be represented by its own sub-metric or the sub-metrics for the different hops can be combined in a composite metric. The first and second radio metrics can e.g. be found in so-called QoS (Quality of Service) indicators, that can be based on e.g. signal strength, return trip time, number of re-transmissions, packet delivery rate, etc.

In a *select downlink route* step 58, the gateway 1 selects a downlink routing path to correspond to the instance, of the first multicast instance and the second multicast instance, that is determined to exhibit better radio metrics, e.g. based on the QoS indicators. In this way, an effective downlink path is determined where radio characteristics have proved to be the best. The route can then be communicated to other nodes in the communication network 8, such as router nodes 3.

Fig 4 is a schematic diagram illustrating components of the routing node 3 and the gateway 1 of Fig 1. A processor 60 is provided using any combination of one or more of a suitable central processing unit (CPU), graphics processing unit (GPU), multiprocessor, microcontroller, digital signal processor (DSP), etc., capable of executing software instructions 67 stored in a memory 64, which can thus be a computer program product. The processor 60 could alternatively be implemented using an application specific integrated circuit (ASIC), field programmable gate array (FPGA), etc. The processor 60 can be configured to execute the method described with reference to Fig 2 and Fig 3 above.

The memory 64 can be any combination of random-access memory (RAM) and/or read-only memory (ROM). The memory 64 also comprises non-transitory persistent storage, which, for example, can be any single one or combination of magnetic memory, optical memory, or solid-state memory.

A data memory 66 is also provided for reading and/or storing data during execution of software instructions in the processor 60. The data memory 66 can be any combination of RAM and/or ROM.

The routing node 3/gateway 1 further comprises an I/O interface 62 for communicating with external and/or internal entities, such as other network nodes 1, 2, 3 in the communication network 8. Optionally, the I/O interface 62 also includes a user interface.

Other components are omitted in order not to obscure the concepts presented herein.

Fig 5 shows one example of a computer program product 90 comprising computer readable means. On this computer readable means, a computer program 91 can be stored in a non-transitory memory. The computer program can cause a processor to execute a method according to embodiments described herein. In this example, the computer program product is in the form of a removable solid-state memory, e.g. a Universal Serial Bus (USB) drive. As explained above, the computer program product could also be embodied in a memory of a device, such as the computer program product 64 of Fig 4. While the computer program 91 is here schematically shown as a section of the removable solid-state memory, the computer program can be stored in any way which is suitable for the computer program product, such as another type of removable solid-state memory, or an optical disc, such as a CD (compact disc), a DVD (digital versatile disc) or a Blu-Ray disc.

The aspects of the present disclosure have mainly been described above with reference to a few embodiments. However, as is readily appreciated by a person skilled in the art, other embodiments than the ones disclosed above are equally possible within the scope of the invention, as defined by the appended patent claims. Thus, while various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method for routing data in a communication network (8), the method comprising:
determining that reliability of communication is to be improved;
transmitting, based on determining that reliability of communication is to be improved, an uplink message from an end node (2) using multicast;
receiving (40) the uplink message from the end node (2) over a multicast wireless transmission;
forwarding (42) the uplink message towards a destination node over a unicast transmission;
receiving (44), after the forwarding of the uplink message, a downlink message over a unicast transmission;
determining (46) that a recipient of the downlink message is the end node (2); and
transmitting (48) the downlink message over multicast to the end node (2);
wherein the transmitting (48) the downlink message over multicast is only performed conditional on determining that the recipient of the downlink message is the end node (2) from which the uplink message was received over multicast;
wherein the determining that reliability of communication is to be improved and the transmitting an uplink message are performed by the end node (2) and;
the receiving the uplink message, the forwarding the uplink message, the receiving a downlink message, the determining that a recipient of the downlink message is the end node, and the transmitting the downlink message are performed by the routing node (3).

2. A system for routing data in a communication network (8), the system comprising an end node (2) and a routing node (3), wherein the end node (2) is configured to:
determine that reliability of communication is to be improved;
transmit, based on determining that reliability of communication is to be improved, an uplink message from the end node (2) using multicast;
and wherein the routing node (3) comprises:
a processor (60); and
a memory (64) storing instructions (67) that, when executed by the processor, cause the routing node (3) to:
receive the uplink message from the end node (2) over a multicast wireless transmission;
forward the uplink message towards a destination node over a unicast transmission;
receive, after the forwarding of the uplink message, a downlink message over a unicast transmission;
determine that a recipient of the downlink message is the end node (2); and
transmit the downlink message over multicast to the end node (2);
wherein the instructions to transmit the downlink message over multicast comprise instructions (67) that, when executed by the processor, cause the routing node (3) to transmit the downlink message conditional on determining that the recipient of the downlink message is the end node (2) from which the uplink message was received over multicast
wherein the determining that reliability of communication is to be improved and the transmitting an uplink message are performed by the end node (2) and;
the receiving the uplink message, the forwarding the uplink message, the receiving a downlink message, the determining that a recipient of the downlink message is the end node, and the transmitting the downlink message are performed by the routing node (3).

3. A computer program (67, 91) for routing data in a communication network (8), the computer program comprising computer program code which, when executed on an end node in the communication network (8), causes the end node to:
determine that reliability of communication is to be improved;
transmit, based on determining that reliability of communication is to be improved, an uplink message from the end node (2) using multicast;
wherein the computer program comprises computer program code which, when executed on a routing node in the communication network (8), causes the routing node in the communication network (8) to:
receive an uplink message from an end node (2) over a multicast wireless transmission;
forward the uplink message towards a destination node over a unicast transmission;
receive, after the forwarding of the uplink message, a downlink message over a unicast transmission;
determine that a recipient of the downlink message is the end node (2); and
transmit the downlink message over multicast to the end node (2);
wherein the computer program code to transmit the downlink message over multicast comprises computer program code which, when executed on a routing data in a communication network (8) causes the routing data in a communication network (8) to only transmit the downlink message over multicast conditional on determining that the recipient of the downlink message is the end node (2) from which the uplink message was received over multicast.

4. A computer program product (64, 90) comprising a computer program according to claim 3 and a computer readable means comprising non-transitory memory in which the computer program is stored.

5. A method for routing data in a communication network (8), the method being performed by a gateway (1), the method comprising:
receiving (50) a first multicast instance of an uplink message;
determining (52) first radio metrics of the first multicast instance of the uplink message;
receiving (54) a second multicast instance of the uplink message;
determining (56) second radio metrics of the second multicast instance of the uplink message; and
selecting (58) a downlink routing path to correspond to the instance, of the first multicast instance and the second multicast instance, that is determined to exhibit better radio metrics;
wherein the first and second radio metrics are based on multiple hops of the uplink message.

6. A gateway (1) for routing data in a communication network (8), the gateway (1) comprising:
a processor (60); and
a memory (64) storing instructions (67) that, when executed by the processor, cause the gateway (1) to:
receive a first multicast instance of an uplink message;
determine first radio metrics of the first multicast instance of the uplink message;
receive a second multicast instance of the uplink message;
determine second radio metrics of the second multicast instance of the uplink message; and
select a downlink routing path to correspond to the instance, of the first multicast instance and the second multicast instance, that is determined to exhibit better radio metrics;
wherein the first and second radio metrics are based on multiple hops of the uplink message.

7. A computer program (67, 91) for routing data in a communication network (8), the computer program comprising computer program code which, when executed on a gateway (1) causes the gateway (1) to:
receive a first multicast instance of an uplink message;
determine first radio metrics of the first multicast instance of the uplink message;
receive a second multicast instance of the uplink message;
determine second radio metrics of the second multicast instance of the uplink message; and
select a downlink routing path to correspond to the instance, of the first multicast instance and the second multicast instance, that is determined to exhibit better radio metrics;
wherein the first and second radio metrics are based on multiple hops of the uplink message.

8. A computer program product (64, 90) comprising a computer program according to claim 7 and a computer readable means comprising non-transitory memory in which the computer program is stored.

## Patentansprüche

1. Verfahren zum Routen von Daten in einem Kommunikationsnetzwerk (8), wobei das Verfahren Folgendes umfasst:
Bestimmen, dass die Zuverlässigkeit der Kommunikation verbessert werden soll;
Übertragen einer Uplink-Nachricht von einem Endknoten (2) unter Verwendung von Multicast, basierend auf dem Bestimmen, dass die Zuverlässigkeit der Kommunikation verbessert werden soll;
Empfangen (40) der Uplink-Nachricht vom Endknoten (2) über eine drahtlose Multicast-Übertragung;
Weiterleiten (42) der Uplink-Nachricht in Richtung eines Zielknotens über eine Unicast-Übertragung;
Empfangen (44) einer Downlink-Nachricht über eine Unicast-Übertragung nach der Weiterleitung der Uplink-Nachricht;
Bestimmen (46), dass ein Empfänger der Downlink-Nachricht der Endknoten (2) ist; und
Übertragen (48) der Downlink-Nachricht über Multicast an den Endknoten (2);
wobei das Übertragen (48) der Downlink-Nachricht über Multicast nur unter der Bedingung durchgeführt wird, dass bestimmt wird, dass der Empfänger der Downlink-Nachricht der Endknoten (2) ist, von dem die Uplink-Nachricht über Multicast empfangen wurde;
wobei das Bestimmen, dass die Zuverlässigkeit der Kommunikation verbessert werden soll, und das Übertragen einer Uplink-Nachricht vom Endknoten (2) durchgeführt werden und;
das Empfangen der Uplink-Nachricht, das Weiterleiten der Uplink-Nachricht, das Empfangen einer Downlink-Nachricht, das Bestimmen, dass ein Empfänger der Downlink-Nachricht der Endknoten ist, und das Übertragen der Downlink-Nachricht vom Routing-Knoten (3) durchgeführt werden.

2. System zum Routen von Daten in einem Kommunikationsnetzwerk (8), wobei das System einen Endknoten (2) und einen Routing-Knoten (3) umfasst, wobei der Endknoten (2) konfiguriert ist zum:
Bestimmen, dass die Zuverlässigkeit der Kommunikation verbessert werden soll;
Übertragen einer Uplink-Nachricht vom Endknoten (2) unter Verwendung von Multicast, basierend auf dem Bestimmen, dass die Zuverlässigkeit der Kommunikation verbessert werden soll;
und wobei der Routing-Knoten (3) Folgendes umfasst:
einen Prozessor (60); und
einen Speicher (64), der Anweisungen (67) speichert, die, wenn sie vom Prozessor ausgeführt werden, den Routing-Knoten (3) veranlassen zum:
Empfangen der Uplink-Nachricht vom Endknoten (2) über eine drahtlose Multicast-Übertragung;
Weiterleiten der Uplink-Nachricht über eine Unicast-Übertragung in Richtung eines Zielknotens;
Empfangen, nach der Weiterleitung der Uplink-Nachricht, einer Downlink-Nachricht über eine Unicast-Übertragung;
Bestimmen, dass ein Empfänger der Downlink-Nachricht der Endknoten (2) ist; und
Übertragen der Downlink-Nachricht über Multicast an den Endknoten (2);
wobei die Anweisungen zum Übertragen der Downlink-Nachricht über Multicast Anweisungen (67) umfassen, die, wenn sie vom Prozessor ausgeführt werden, den Routing-Knoten (3) dazu veranlassen, die Downlink-Nachricht unter der Bedingung zu Übertragen, dass bestimmt wird, dass der Empfänger der Downlink-Nachricht der Endknoten (2) ist, von dem die Uplink-Nachricht über Multicast empfangen wurde,
wobei das Bestimmen, dass die Zuverlässigkeit der Kommunikation verbessert werden soll, und das Übertragen einer Uplink-Nachricht vom Endknoten (2) durchgeführt werden und;
das Empfangen der Uplink-Nachricht, das Weiterleiten der Uplink-Nachricht, das Empfangen einer Downlink-Nachricht, das Bestimmen, dass ein Empfänger der Downlink-Nachricht der Endknoten ist, und das Übertragen der Downlink-Nachricht vom Routing-Knoten (3) durchgeführt werden.

3. Computerprogramm (67, 91) zum Routen von Daten in einem Kommunikationsnetzwerk (8), wobei das Computerprogramm Computerprogrammcode umfasst, der, wenn er auf einem Endknoten im Kommunikationsnetzwerk (8) ausgeführt wird, den Endknoten veranlasst zum:
Bestimmen, dass die Zuverlässigkeit der Kommunikation verbessert werden soll;
Übertragen einer Uplink-Nachricht vom Endknoten (2) unter Verwendung von Multicast, basierend auf dem Bestimmen, dass die Zuverlässigkeit der Kommunikation verbessert werden soll;
wobei das Computerprogramm Computerprogrammcode umfasst, der, wenn er auf einem Routing-Knoten im Kommunikationsnetzwerk (8) ausgeführt wird, den Routing-Knoten im Kommunikationsnetzwerk (8) veranlasst zum:
Empfangen einer Uplink-Nachricht von einem Endknoten (2) über eine drahtlose Multicast-Übertragung;
Weiterleiten der Uplink-Nachricht über eine Unicast-Übertragung in Richtung eines Zielknotens;
Empfangen, nach der Weiterleitung der Uplink-Nachricht, einer Downlink-Nachricht über eine Unicast-Übertragung;
Bestimmen, dass ein Empfänger der Downlink-Nachricht der Endknoten (2) ist; und
Übertragen der Downlink-Nachricht über Multicast an den Endknoten (2);
wobei der Computerprogrammcode zum Übertragen der Downlink-Nachricht über Multicast Computerprogrammcode umfasst, der, wenn er auf Routing-Daten in einem Kommunikationsnetzwerk (8) ausgeführt wird, die Routing-Daten in einem Kommunikationsnetzwerk (8) dazu veranlasst, die Downlink-Nachricht über Multicast nur unter der Bedingung übertragen, zu bestimmen, dass der Empfänger der Downlink-Nachricht der Endknoten (2) ist, von dem die Uplink-Nachricht über Multicast empfangen wurde.

4. Computerprogrammprodukt (64, 90), das ein Computerprogramm nach Anspruch 3 und ein computerlesbares Mittel umfasst, das einen nichtflüchtigen Speicher umfasst, auf dem das Computerprogramm gespeichert ist.

5. Verfahren zum Routen von Daten in einem Kommunikationsnetzwerk (8), wobei das Verfahren von einem Gateway (1) durchgeführt wird, wobei das Verfahren Folgendes umfasst:
Empfangen (50) einer ersten Multicast-Instanz einer Uplink-Nachricht;
Bestimmen (52) erster Funkmetrik der ersten Multicast-Instanz der Uplink-Nachricht;
Empfangen (54) einer zweiten Multicast-Instanz der Uplink-Nachricht;
Bestimmen (56) zweiter Funkmetrik der zweiten Multicast-Instanz der Uplink-Nachricht; und
Auswählen (58) eines Downlink-Routingpfads, der der Instanz der ersten Multicast-Instanz und der zweiten Multicast-Instanz entspricht, von der bestimmt wurde, dass sie bessere Funkmetriken aufweist;
wobei die erste und die zweite Funkmetrik auf mehreren Hops der Uplink-Nachricht basieren.

6. Gateway (1) zum Routen von Daten in einem Kommunikationsnetzwerk (8), wobei das Gateway (1) Folgendes umfasst:
einen Prozessor (60); und
einen Speicher (64), der Anweisungen (67) speichert, die, wenn sie vom Prozessor ausgeführt werden,
das Gateway (1) veranlassen zum:
Empfangen einer ersten Multicast-Instanz einer Uplink-Nachricht;
Bestimmen der ersten Funkmetrik der ersten Multicast-Instanz der Uplink-Nachricht;
Empfangen einer zweiten Multicast-Instanz der Uplink-Nachricht;
Bestimmen der zweiten Funkmetrik der zweiten Multicast-Instanz der Uplink-Nachricht; und
Auswählen eines Downlink-Routingpfads, der der Instanz der ersten Multicast-Instanz und der zweiten Multicast-Instanz entspricht, von der bestimmt wurde, dass sie bessere Funkmetriken aufweist;
wobei die erste und die zweite Funkmetrik auf mehreren Hops der Uplink-Nachricht basieren.

7. Computerprogramm (67, 91) zum Routen von Daten in einem Kommunikationsnetzwerk (8), wobei das Computerprogramm Computerprogrammcode umfasst, der, wenn er auf einem Gateway (1) ausgeführt wird, das Gateway (1) veranlasst zum:
Empfangen einer ersten Multicast-Instanz einer Uplink-Nachricht;
Bestimmen der ersten Funkmetrik der ersten Multicast-Instanz der Uplink-Nachricht;
Empfangen einer zweiten Multicast-Instanz der Uplink-Nachricht;
Bestimmen der zweiten Funkmetrik der zweiten Multicast-Instanz der Uplink-Nachricht; und
Auswählen eines Downlink-Routingpfads, der der Instanz der ersten Multicast-Instanz und der zweiten Multicast-Instanz entspricht, von der bestimmt wurde, dass sie bessere Funkmetriken aufweist;
wobei die erste und die zweite Funkmetrik auf mehreren Hops der Uplink-Nachricht basieren.

8. Computerprogrammprodukt (64, 90), das ein Computerprogramm nach Anspruch 7 und ein computerlesbares Mittel umfasst, das einen nichtflüchtigen Speicher umfasst, auf dem das Computerprogramm gespeichert ist.

## Revendications

1. Procédé de routage de données dans un réseau de communication (8), le procédé comprenant :
la détermination qu'une fiabilité de communication est à améliorer ;
la transmission, sur la base de la détermination que la fiabilité de communication est à améliorer, d'un message de liaison montante à partir d'un nœud d'extrémité (2) en utilisant la multidiffusion ;
la réception (40) du message de liaison montante provenant du nœud d'extrémité (2) via une transmission sans fil multidiffusion ;
le transfert (42) du message de liaison montante vers un nœud de destination via une transmission monodiffusion ;
la réception (44), après le transfert du message de liaison montante, d'un message de liaison descendante via une transmission monodiffusion ;
la détermination (46) qu'un destinataire du message de liaison descendante est le nœud d'extrémité (2) ; et
la transmission (48) du message de liaison descendante par multidiffusion au nœud d'extrémité (2) ;
dans lequel la transmission (48) du message de liaison descendante par multidiffusion est effectuée uniquement à condition de déterminer que le destinataire du message de liaison descendante est le nœud d'extrémité (2) duquel le message de liaison montante a été reçu par multidiffusion ;
dans lequel la détermination que la fiabilité de communication est à améliorer et la transmission d'un message de liaison montante sont effectuées par le nœud d'extrémité (2) ; et
la réception du message de liaison montante, le transfert du message de liaison montante, la réception d'un message de liaison descendante, la détermination qu'un destinataire du message de liaison descendante est le nœud d'extrémité et la transmission du message de liaison descendante sont effectués par le nœud de routage (3).

2. Système de routage de données dans un réseau de communication (8), le système comprenant un nœud d'extrémité (2) et un nœud de routage (3), dans lequel le nœud d'extrémité (2) est configuré pour :
déterminer qu'une fiabilité de communication est à améliorer ;
transmettre, sur la base de la détermination que la fiabilité de communication est à améliorer, un message de liaison montante à partir du nœud d'extrémité (2) en utilisant la multidiffusion ;
et dans lequel le nœud de routage (3) comprend :
un processeur (60) ; et
une mémoire (64) stockant des instructions (67) qui, lorsqu'elles sont exécutées par le processeur, amènent le nœud de routage (3) à :
recevoir le message de liaison montante provenant du nœud d'extrémité (2) via une transmission sans fil multidiffusion ;
transférer le message de liaison montante vers un nœud de destination via une transmission monodiffusion ;
recevoir, après le transfert du message de liaison montante, un message de liaison descendante via une transmission monodiffusion ;
déterminer qu'un destinataire du message de liaison descendante est le nœud d'extrémité (2) ; et
transmettre le message de liaison descendante par multidiffusion au nœud d'extrémité (2) ;
dans lequel les instructions pour transmettre le message de liaison descendante par multidiffusion comprennent des instructions (67) qui, lorsqu'elles sont exécutées par le processeur, amènent le nœud de routage (3) à transmettre le message de liaison descendante à condition de déterminer que le destinataire du message de liaison descendante est le nœud d'extrémité (2) duquel le message de liaison montante a été reçu par multidiffusion
dans lequel la détermination que la fiabilité de communication est à améliorer et la transmission d'un message de liaison montante sont effectuées par le nœud d'extrémité (2) ; et
la réception du message de liaison montante, le transfert du message de liaison montante, la réception d'un message de liaison descendante, la détermination qu'un destinataire du message de liaison descendante est le nœud d'extrémité et la transmission du message de liaison descendante sont effectués par le nœud de routage (3).

3. Programme informatique (67, 91) pour le routage de données dans un réseau de communication (8), le programme informatique comprenant un code de programme informatique qui, lorsqu'il est exécuté sur un nœud d'extrémité dans le réseau de communication (8), amène le nœud d'extrémité à :
déterminer qu'une fiabilité de communication est à améliorer ;
transmettre, sur la base de la détermination que la fiabilité de communication est à améliorer, un message de liaison montante à partir du nœud d'extrémité (2) en utilisant la multidiffusion ;
dans lequel le programme informatique comprend un code de programme informatique qui, lorsqu'il est exécuté sur un nœud de routage dans le réseau de communication (8), amène le nœud de routage dans le réseau de communication (8) à :
recevoir un message de liaison montante à partir d'un nœud d'extrémité (2) via une transmission sans fil multidiffusion ;
transférer le message de liaison montante vers un nœud de destination via une transmission monodiffusion ;
recevoir, après le transfert du message de liaison montante, un message de liaison descendante via une transmission monodiffusion ;
déterminer qu'un destinataire du message de liaison descendante est le nœud d'extrémité (2) ; et
transmettre le message de liaison descendante par multidiffusion au nœud d'extrémité (2) ;
dans lequel le code de programme informatique pour transmettre le message de liaison descendante par multidiffusion comprend un code de programme informatique qui, lorsqu'il est exécuté sur des données de routage dans un réseau de communication (8), amène les données de routage dans un réseau de communication (8) à transmettre uniquement le message de liaison descendante par multidiffusion à condition de déterminer que le destinataire du message de liaison descendante est le nœud d'extrémité (2) duquel le message de liaison montante a été reçu par multidiffusion.

4. Produit de programme informatique (64, 90) comprenant un programme informatique selon la revendication 3 et un moyen lisible par ordinateur comprenant une mémoire non transitoire dans laquelle le programme informatique est stocké.

5. Procédé de routage de données dans un réseau de communication (8), le procédé étant mis en œuvre par une passerelle (1), le procédé comprenant :
la réception (50) d'une première instance de multidiffusion d'un message de liaison montante ;
la détermination (52) de premières mesures radio de la première instance de multidiffusion du message de liaison montante ;
la réception (54) d'une seconde instance de multidiffusion du message de liaison montante ;
la détermination (56) de secondes mesures radio de la seconde instance de multidiffusion du message de liaison montante ; et
la sélection (58) d'un chemin de routage de liaison descendante pour correspondre à l'instance, de la première instance de multidiffusion et de la seconde instance de multidiffusion, qui est déterminée comme présentant de meilleures mesures radio ;
dans lequel les premières et secondes mesures radio sont basées sur des sauts multiples du message de liaison montante.

6. Passerelle (1) pour le routage de données dans un réseau de communication (8), la passerelle (1) comprenant :
un processeur (60) ; et
une mémoire (64) stockant des instructions (67) qui, lorsqu'elles sont exécutées par le processeur,
amènent la passerelle (1) à :
recevoir une première instance de multidiffusion d'un message de liaison montante;
déterminer des premières mesures radio de la première instance de multidiffusion du message de liaison montante ;
recevoir une seconde instance de multidiffusion du message de liaison montante ;
déterminer des secondes mesures radio de la seconde instance de multidiffusion du message de liaison montante ; et
sélectionner un chemin de routage de liaison descendante pour correspondre à l'instance, de la première instance de multidiffusion et de la seconde instance de multidiffusion, qui est déterminée comme présentant de meilleures mesures radio ;
dans laquelle les premières et secondes mesures radio sont basées sur des sauts multiples du message de liaison montante.

7. Programme informatique (67, 91) pour le routage de données dans un réseau de communication (8), le programme informatique comprenant un code de programme informatique qui, lorsqu'il est exécuté sur une passerelle (1), amène la passerelle (1) à :
recevoir une première instance de multidiffusion d'un message de liaison montante;
déterminer des premières mesures radio de la première instance de multidiffusion du message de liaison montante ;
recevoir une seconde instance de multidiffusion du message de liaison montante ;
déterminer des secondes mesures radio de la seconde instance de multidiffusion du message de liaison montante ; et
sélectionner un chemin de routage de liaison descendante pour correspondre à l'instance, de la première instance de multidiffusion et de la seconde instance de multidiffusion, qui est déterminée comme présentant de meilleures mesures radio ;
dans lequel les premières et secondes mesures radio sont basées sur des sauts multiples du message de liaison montante.

8. Produit de programme informatique (64, 90) comprenant un programme informatique selon la revendication 7 et un moyen lisible par ordinateur comprenant une mémoire non transitoire dans laquelle le programme informatique est stocké.
